# EUROPEAN PATENT APPLICATION

(11) **EP 2 963 775 A1**
(43) Date of publication of application: **06.01.2016**
(21) Application number: 14175619.7
(22) Date of filing: 03.07.2014
(51) Int. Cl.: H02K 1/27, H02K 15/03, H02K 1/30, H02K 15/12

(54) **A fluid tight spoke type rotor**

(71) Applicant: Gate Motor Teknolojileri Sanayi ve Ticaret A.S., Atasehir, Istanbul (TR)
(72) Inventor: Ekin, Cihad, Istanbul (TR); Acikgoz, Harun, Istanbul (TR)
(74) Representative: Sevinç, Erkan

(57) **Abstract**

The present invention proposes a fluid tight spoke type rotor for an electric motor and a method for its manufacture. Said rotor comprises an injection molded rotor core having a first lateral side and a second lateral side and a central opening for inserting shaft. Said lateral sides are interconnected to each other by at least a connecting rod which is formed integrally with said first and second lateral sides each of said first and second lateral sides comprises a plurality magnet slots and a plurality of lamination stack slots and each magnet slot is followed by a respective lamination stack slot in the peripheral direction of the rotor. Said slots extend in the radial direction of the rotor among said first and second lateral sides and are adapted to accommodate, respectively, a magnet and a lamination stack in each of said slots. Said rotor further comprises an injection molded casing covering entire cylindrical outer periphery of the rotor and at least partially, the outer faces of said first and second lateral sides such that the rotor is made fluid tight.

## Description

### Technical Field of the Invention

The present invention relates to a spoke type rotor and a method for its manufacture. More particularly, the present invention relates to a fluid tight spoke type permanent magnet rotor for an electric motor, having radially embedded permanent magnets and lamination stacks and whose outer periphery is completely covered by a plastic injection-molding for use of the rotor in a wet environment.

### Background of the Invention

A rotor is the moving part of an electric motor, which rotates as the magnetic field formed around the windings of the motor is arranged such that a torque is developed about the rotor's axis. There are different types of motors such as surface mounted permanent magnet (PM) motor, inset PM motor or a spoke type Interior PM (IPM) motor. The types of rotors used in the inner rotor type motor are mainly classified into an SPM (Surface Permanent Magnet) type rotor in which a plurality of magnets are attached to the outer circumferential surface of a rotor core and an IPM (Interior Permanent Magnet) type rotor in which magnets are buried into a rotor core.

A conventional SPM (surface permanent magnet) motor has a structure in which a permanent magnet is attached to the rotor surface. It only uses magnetic torque from a magnet. A spoke-type motor has some additional advantages compared to other types. It has a higher torque in comparison to a SPM-type motor. The main flux of the IPM-type motor has a path that passes through two magnets.

In order to achieve higher efficiency or higher performance, quantity of the material, especially for ferrite permanents, should be increased in such type of rotors. On the other hand, some known rare earth permanent magnets, such as neodymium iron boron magnets, generate greater amount of flux than typical ferrite permanent magnets. However, the cost of rare earth magnets has drastically risen in recent years. Additionally, there exists other critical problems such as exclusivity in supply and higher processing costs. The production cost of Nd- permanent magnet is considerably high and the Fe-permanent magnet is competitively cheaper than Nd-permanent magnet. To this end, there is a need for low-cost permanent magnet systems that generate similar amounts of flux and provide efficiencies similar to systems using rare earth magnets.

In the prior art, spoke-type rotors used for electric motors are known. A spoke-type permanent magnet motor has higher torque density than the conventional one resulting from its structure for concentrating flux from permanent magnets. In this type of motors, a plurality of magnets is placed radially around the shaft.

The corrosion resistance of ferrite magnets is considered to be sufficient and no surface treatments are required. Ferrite magnets can be used at the rotor in wet environments; such magnets do not require corrosion protection. No precautions are required against corrosion for the ferrite magnets. On the other hand, if lamination stacks such as magnetic sheets are used in a rotor, said laminations shall certainly be protected against corrosion.

A prior art publication in the technical field of the present invention may be referred to as EP1841041 among others, the document disclosing a rotor and an injection molding process. The rotor has magnet poles fixed by a plastics connection to a return plate. The plastics connection is provided between the return plate and a rotor shaft, and is manufactured by injection molding. A plastic casing surrounds the rotor, through which the rotor shaft passes. However, the document is silent about a spoke-type rotor. A plurality of magnets are attached to the outer circumferential surface of a rotor core that generates lower amounts of flux compared to the spoke type systems.

Along with the above information in relation to rotors, when using electric motors in a moist or wet environment, additional complex sealing of the rotor is required. Anticorrosion measures shall be taken and rigidity shall be maintained for a wet rotor application. There is a need for rotors which employ relatively cheap ferrite-based magnets and, at the same time, which generate a strong magnetic force especially in wet environments.

### Objects of the invention

Main object of the present invention is to propose a rotor and a process for its manufacture, with which the manufacturing complexity is considerably reduced and higher efficiency is obtained.

Another object of the present invention is to propose a rotor provided with a plastic casing which completely covers the outer periphery of the rotor such that the rotor is completely resistant to moisture or wet environments.

Another object of the present invention is to propose a rotor covered with plastic material such that it simplifies the positioning and fixing of the magnets on the rotor.

Another object of the present invention is to propose a rotor designed according to the spoke-type design that increase torque density compared to conventional rotors and that allow use of ferrite-based magnets in rotors for wet environments.

Another object of the present invention is to propose a spoke-type rotor which maximizes air-gap flux density using ferrite permanent magnets which is cheaper compared rare-earth permanent magnets.

Another object of the present invention is to propose a spoke-type rotor which is covered by a plastic material such that magnets of the rotor are protected against potential damage from outside, for example against scratches or the like.

Another object of the present invention is to provide a spoke-type rotor capable of generating enhanced output torque albeit use of reduced amount of the permanent magnet.

### Summary of the Invention

The present invention proposes a fluid tight spoke type rotor for an electric motor and a method for its manufacture. Said rotor comprises an injection molded rotor core having a first lateral side and a second lateral side and a central opening for inserting shaft. Said lateral sides are interconnected to each other by at least a connecting rod which is formed integrally with said first and second lateral sides each of said first and second lateral sides comprises a plurality magnet slots and a plurality of lamination stack slots and each magnet slot is followed by a respective lamination stack slot in the peripheral direction of the rotor. Said slots extend in the radial direction of the rotor among said first and second lateral sides and are adapted to accommodate, respectively, a magnet and a lamination stack in each of said slots. Said rotor further comprises an injection molded casing covering entire cylindrical outer periphery of the rotor and at least partially, the outer faces of said first and second lateral sides such that the rotor is made fluid tight.

The present invention further discloses a method for manufacturing a spoke-type rotor for an electric motor, comprising the following steps:
(a) producing a rotor core by a first injection-molding, having a first lateral side and a second lateral side each of said first and second lateral sides comprising a plurality magnet slots and a plurality of lamination stack slots wherein each magnet slot is followed by a respective lamination stack slot in the peripheral direction of the rotor,
(b) inserting a plurality of magnets and lamination stacks, respectively, to each of said slots,
(c) covering entire cylindrical outer periphery of the rotor and at least partially, the outer faces of said first and second lateral sides such that the rotor is made fluid tight by a subsequent second injection molding.

### Brief Description of the Figures

Accompanying drawings are given solely for the purpose of exemplifying a spoke type rotor whose advantages over the prior art will be explained in detail hereinafter:
Fig. 1 demonstrates a perspective view of a rotor shaft according to the present invention.
Fig. 2 demonstrates a perspective view of a rotor core after a first injection-molding step according to the present invention.
Fig. 3 demonstrates a perspective view of a rotor core shown in fig. 2 with a plurality of magnets placed radially according to the present invention.
Fig. 4 demonstrates a perspective view of a rotor base shown in fig. 2 with a plurality of lamination stacks placed radially according to the present invention.
Fig. 5 demonstrates a perspective view of a rotor after a second injection-molding step according to the present invention.
Fig. 6 demonstrates a cross sectional view of a rotor shown in fig. 5 according to the present invention.

### Detailed Description of the Invention

Reference numeral used in the appended drawings for exemplifying the present invention are as follows;
- 3.: Lamination stack
- 4.: Magnet
- 5.: Shaft
- 6.: Rotor core
- 7.: Magnet slot
- 8.: Lamination stack slot
- 9.: Groove
- 14.: Connection portion
- 15.: Rotor
- 15a: Rotor axis
- 16.: First lateral side
- 17.: Second lateral side
- 18.: Connecting rod
- 19.: Central opening
- 20.: Plastic casing
- X: Longitudinal axis

The present invention proposes a rotor (15) comprising a rotor core (6), a shaft (5) provided with at least one groove (9), a plurality of magnets (4) placed radially according to the axis of the rotor core (15a) and a plurality of lamination stacks (3) preferably created from magnetic sheets.

The magnetic flux generated by magnetic pole surfaces of each of the magnets can be effectively used in spoke-type rotors. According to the present invention, for reduced cost and efficient safe use in wet environment, ferrite type magnets and laminations produced from magnetic sheets are used in the rotor and then covered by an injection-molding process. Some known rare earth permanent magnets, such as neodymium iron boron magnets, generate larger amount of flux compared to typical ferrite permanent magnets. However, the cost of such earth magnets has risen considerably in recent years. Ferrite magnets provide reduced cost. One of the aims of the present invention is to use relatively cheap ferrite-based magnets and, at the same time, to generate a strong magnetic force around the rotor for use in wet environments. The rotor core (6) is produced by an injection-molding process, which will be called later as a first plastic injection. An injection molded rotor core (6) is substantially cylindrical and includes a first lateral side (16) and second lateral side (17), a central opening (19) having a diameter sized and shaped to the diameter of the shaft (5) of the rotor. Said first lateral side (16) and second lateral side (17) are interconnected to each other by at least one connecting rod (18) which is formed integrally with said first and second lateral sides (16,17) during injection molding.

According to the present invention, the spoke type permanent magnet rotor maintains high output and maintains the same size and performance as a rotor using the rare-earth permanent magnets. The rotor particularly made for operation in wet environments. The rotor (15) maintains high output density or magnetic flux density, to reduce size of the whole rotor and the amount of necessary magnet, and still maintains the same size and performance of a motor employing rare-earth magnets. The spoke- type rotor maximizes air-gap flux density using Ferrite permanent magnet. Said magnets (4) can be ferrite, SmCo and NdFeB series.

During the manufacture of such a rotor (10), the rotor core (6) is formed with a first lateral side (16) and a second lateral side (17) having magnet slots (7) and lamination stack slots (8), in which, a plurality of magnets (4) and laminations (3) are inserted radially. The first lateral side (16) and second lateral side (17) are interconnected by at least one connecting rod (18) which is formed integrally with the first lateral side (16) and second lateral side (17) during said first injection molding (10). The magnet slots (7) and lamination stack slots (8) are configured to receive a plurality of magnets (4) and lamination stacks (3) such that each of the magnets (4) and the lamination stacks (3) are radially inserted in the rotor core (6) and extend at least partially from first lateral side (16) towards second lateral side (17). Each magnet slot (7) is followed by a respective lamination stack slot (8) in the peripheral direction of the rotor (15).

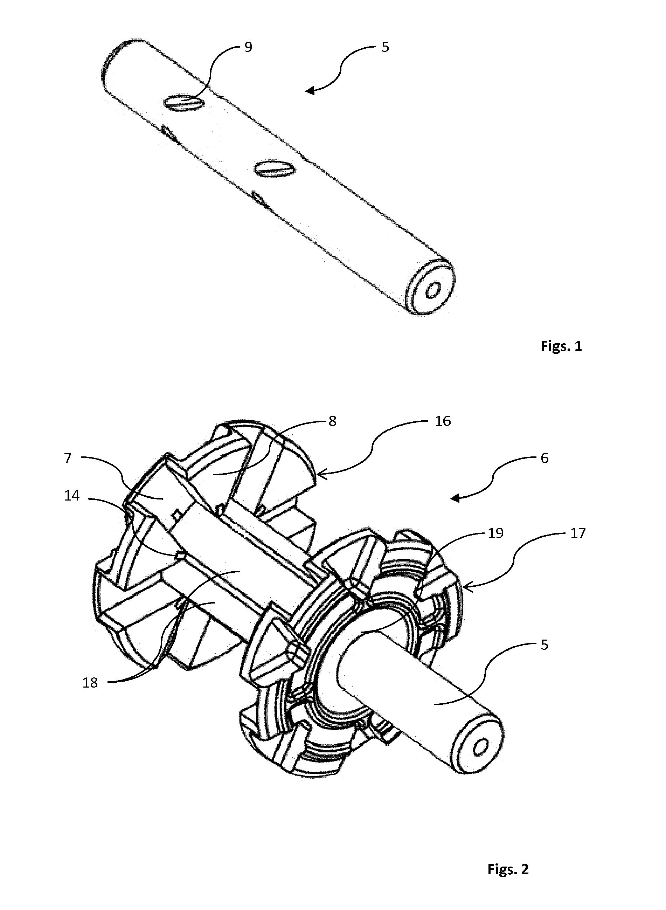

In wet and moist environments, measures shall be taken against corrosion and the magnetic sheet materials should be isolated from the wet environment. As illustrated in Fig. 2, the rotor core (6) of the rotor (15) is produced by a first injection-molding step (10) and then, after placement of the magnets (4) and laminations (3), outer periphery of rotor (15) is substantially covered all around by a subsequent second injection molding, as a consequence; a rotor structure capable of operating in a wet environment is obtained. Additionally, said second injection molding simplifies the positioning and fixing of the magnets and lamination packs on the rotor (15).

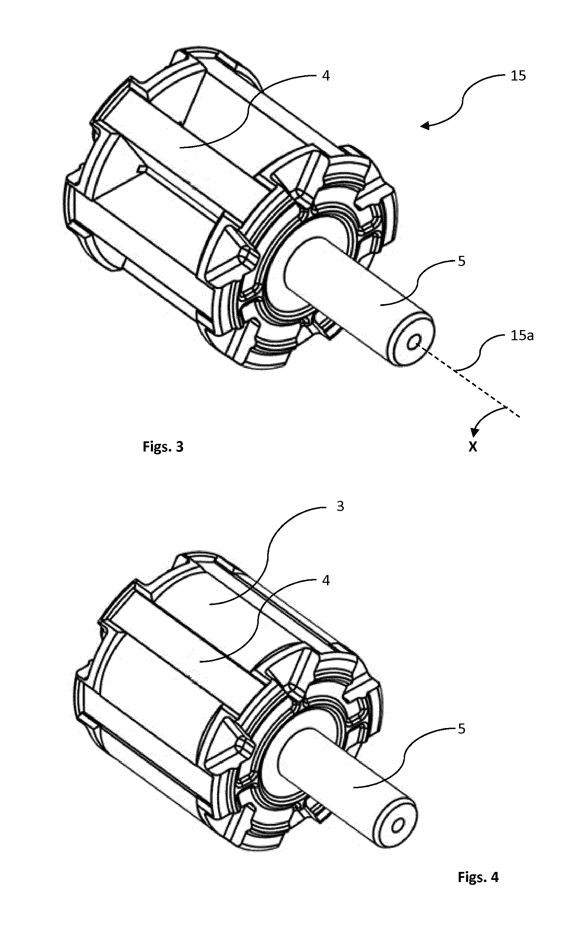

As shown in Fig. 3, the magnet slots (7) and lamination slots (8) have different sizes in axial direction (X) of the rotor (15). Rigidity of the placement is ensured by using magnets (4) having size in longitudinal axial direction larger than the size of the lamination stacks (3) longitudinal axial length.

The magnets (4) which are preferably, but not necessarily, in the form of ferrite permanent magnets are placed radially on the respective magnet slots (7) of the rotor core (6). As shown in Fig. 3, a plurality of magnets (4) are placed on the magnet slots (8) such that the magnetic pole surfaces of the same pole face each other in the circumferential direction. By means of spoke-type permanent magnet rotor, air gap flux density can be twiced with the same magnet grade. Twiced air gap flux density means more power for the same dimensions or larger air gap for cheaper wet rotor mechanical construction. Said magnet slots (7) and lamination stack slots (8) extend in the radial direction of the rotor among said first and second lateral sides (16,17) and are adapted to accommodate, respectively, a magnet (4) and a lamination stack (3) in each of said slots (7,8).

The rotor core (6) contains, preferably, six slots (7) for magnets (4) and six slots (8) for laminations (3). Although illustrated as including six magnets, the rotor core (6) may have any number of magnets (4) such as eight, ten or twelve magnets. The shaft (5) is sized and shaped according to the central opening (19) of the rotor core (6) and is, preferably, manufactured from ceramics or stainless steel. Said shaft (5) comprises angular grooves (9) for secure connection with the plastic material during injection molding. The rotor core (6) and the shaft (5) are concentric and are configured to rotate about axis of rotation X as shown in Fig. 3.

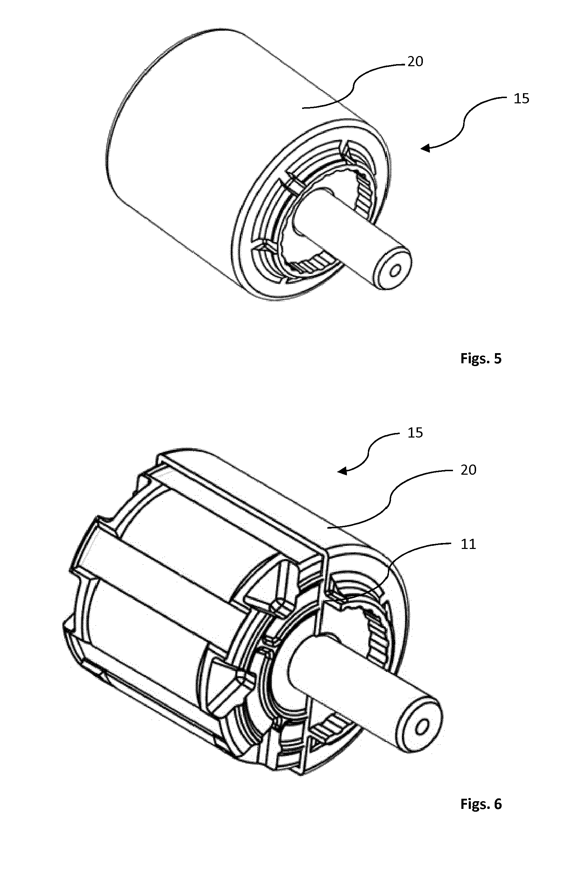

Fig. 5 demonstrates a perspective view of a rotor (15) after a second injection-molding (11) step according to the present invention. After the second injection molding, a plastic casing (20) covers the whole rotor core (6) such that the magnets (4) and the lamination stacks (3) are isolated from outside, particularly a wet environment during operation of the rotor.

Same type plastic material may be used both at the first and second injection-molding steps. The rotor core (6), right after the placement of the magnets and laminations stacks, may be subjected to the secondary injection immediately after the rotor base (6) without allowing the material to cool down, thus ensuring an enhanced bonding between the material in the rotor core (6) and the material in the secondary injection (10). To this end, an impervious insulation layer is formed between the inner and outer parts of the rotor. The structure of the rotor (15) formed after both injection processes is illustrated in Fig. 5.

When the plastic casing (20) is injection-molded in the second molding step, magnets and laminations stacks are pressed uniformly radially towards the rotor core (6). To this end, the imbalance of the complete rotor (15) is reduced, with the result that the complete electric motor runs concentrically and with zero or at least reduced vibration. After the second injection-molding (11), the magnets (4) are also protected against damage from outside the rotor.

Pre-heating can be applied after first injection if the parts do not have adequate temperature after insertion of the magnets (4) and rotor laminations (3) in their slots. The purpose is to obtain a good bonding of the plastic material of the first and second molding processes. If the same plastic material is used in both injection molding processes, the fluid tightness can be increased. Pre-heating would enhance fluid tightness of the rotor. Different materials can also be used by optimizing the pre-heating.

The magnets (4) and lamination stacks (3) must be secured within their slots to prevent movement or play of the magnets and lamination stacks (3) during operation of the rotor. The performance of the motor depends on maintaining the magnets in a known position within the rotor. To increase rigidity of the rotor and to play of magnets and lamination stacks until the second injection process, the rotor core (6) is preferably provided with a connection portion (14) at the both ends of some of the magnet slots (7) and lamination slots (8) for keeping said magnets and the laminations in a tightly manner.

Magnets (4) are referred to be a ferrite type permanent magnet; however, magnets (4) may be fabricated from any suitable material that enables motor to function as described above, for example the magnets may be bonded neodymium, sintered neodymium, and/or samarium cobalt. In a preferred embodiment, magnet slots (7) are generally rectangular and lamination stack slots (8) are triangular. Alternatively, said slots (7, 8) may have any suitable shape corresponding to the shape of the permanent magnets and lamination stacks (3) that enable electric motor to function as described above.

Those skilled in the art will appreciate that the present invention may be susceptible to variations and modifications other than those specifically described. It will be understood that the present invention encompasses all such variations and modifications that fall within its spirit and scope.

The present invention may be applied to traction motors or compressors, blowers, driving motor for pump, etc. of means of transportation such as railroad, automobile, ship, etc.

## Claims

1. A spoke type rotor (15) for an electric motor, said rotor comprising,
- an injection molded rotor core (6) having a first lateral side (16) and a second lateral side (17) and a central opening (19),
- said first lateral side (16) and second lateral side (17) are interconnected to each other by at least a connecting rod (18) which is formed integrally with said first and second lateral sides (16,17),
- each of said first and second lateral sides (16,17) comprises a plurality magnet slots (7) and a plurality of lamination stack slots (8),
- each magnet slot (7) is followed by a respective lamination stack slot (8) in the peripheral direction of the rotor (15),
- said magnet slots (7) and said lamination stack slots (8) extend in the radial direction of the rotor among said first and second lateral sides (16,17) and are adapted to accommodate, respectively, a magnet (4) and a lamination stack (3) in each of said slots (7,8),
- **characterized in that** said rotor (15) further comprises an injection molded casing (20) covering entire cylindrical outer periphery of the rotor (15) and at least partially, the outer faces of said first and second lateral sides (16,17) such that the rotor is made fluid tight.

2. A spoke-type rotor (15) as in Claim 1 wherein the magnets (4) are ferrite, SmCo or NdFeB series.

3. A spoke-type rotor (15) as in Claim 1 **characterized in that** said, said rotor (15) further comprises a shaft (5) which is sized and shaped to fit the central opening (19) of the rotor (15).

4. A spoke-type rotor (15) as in Claim 1 **characterized in that** each of said magnet slots (7) and lamination stack slots (8) are provided with a connection portion (14) for fixing, respectively, a magnet (4) and a lamination stack (3).

5. A spoke-type rotor (15) as in Claim 1 **characterized in that** said magnets (4) and lamination stacks (3) are produced separately and magnetized in the direction facing each other.

6. A spoke-type rotor (15) as in Claim 1 **characterized in that** the material of said plastic casing (20) is the material of said rotor core (6) such that the casing (20) adheres to the outer faces of said first and second lateral sides (16,17) for establishing enhanced fluid tightness.

7. A spoke-type rotor (15) as in Claim 1 **characterized in that** said lamination stack (3) is produced from magnetic sheet material.

8. An electric motor comprising the spoke type rotor of any of the preceding claims.

9. A method for manufacturing a spoke-type rotor (15) for an electric motor, comprising the following steps:
(a) producing a rotor core (6) by a first injection-molding, having a first lateral side (16) and a second lateral side (17) each of said first and second lateral sides (16, 17) comprising a plurality magnet slots (7) and a plurality of lamination stack slots (8) wherein each magnet slot (7) is followed by a respective lamination stack slot (8) in the peripheral direction of the rotor (15),
(b) inserting a plurality of magnets (4) and lamination stacks (3), respectively, to each of said slots (7,8),
(c) covering entire cylindrical outer periphery of the rotor (15) and at least partially, the outer faces of said first and second lateral sides such that the rotor (15) is made fluid tight by a subsequent second injection molding.

10. A method according to Claim 9, wherein the each of lamination stacks (3) is formed by magnetic steel sheet.

11. A method according to Claim 9, wherein the material of the first injection-molding is the material the second injection molding.
